# EUROPEAN PATENT APPLICATION

(11) **EP 4 550 257 A1**
(43) Date of publication of application: **07.05.2025**
(21) Application number: 23207199.3
(22) Date of filing: 31.10.2023
(51) Int. Cl.: G06T 7/00, G01N 21/64, G06V 10/774, G06V 10/82

(54) **SYSTEMS AND METHODS FOR ANALYZING A MULTI-WELL PLATE FIELD**

(71) Applicant: F. Hoffmann-La Roche AG, 4070 Basel (CH); Roche Diagnostics GmbH, 68305 Mannheim (DE)
(72) Inventor: HORAT, Martin, 6343 Rotkreuz ZG (CH); MUELLER, Wolfgang, 6002 Luzern (CH); RENZ, Thomas, 6343 Rotkreuz ZG (CH)
(74) Representative: Mewburn Ellis LLP

(57) **Abstract**

The disclosure is related to analyzing multi-well plates used in analyzers. In an aspect, a method includes analyzing, using a machine learning model, a sample inserted in an analyzer to determine whether a plate insert matches a multi-well plate (MWP). The method further includes, in response to the machine learning model a mismatch between the plate insert and MWP, generating an alert on the analyzer to notify a user indicating the mismatch. The method also includes, in response to the machine learning model determining that the plate insert matches the MWP, analyzing, using the machine learning model, the sample to determine whether the MWP is sealed with a foil. The method includes, in response to the machine learning model determining that the MWP is not sealed with foil, generating the alert on the analyzer, and otherwise, enabling the analyzer to perform its analysis of the sample.

## Description

### FIELD

Embodiments of the disclosure related generally to analyzers, and more specifically to analyzing multi-well plates used in analyzers.

### BACKGROUND

In some instances, foil on test samples, such as a multi-well plate (MWP), may not be properly applied before running the sample through an analyzer, such as a Polymerase chain reaction (PCR) analyzer, or an incorrect plate insert may be used for a given MWP. For example, a lab technician may not properly apply the foil on the MWP before running the sample on the analyzer. Additionally, some analyzers may be configured to analyze more than one type of MWP. For example, the MWP may be a ninety-six (96) or three hundred eighty four (396) well plate. However, in some instances, a plate insert for a 96 well plate may be applied to a 384 well plate, and vice-versa. Without a properly applied foil or plate insert, sample materials may evaporate during thermal cycling, where temperatures may reach as high as 95° C. This may lead to a loss of the measured sample results and the analyzer itself may be contaminated by the sample. Cleaning of the analyzer is needed as contaminants within the optical path may lead to improper results. In addition, spill due to movements of the sample within the analyzer can lead to cross-contamination and therefore to wrong results.

Accordingly, it would be desirable to provide new systems and methods for recognizing whether a correct insert has been used or a foil has been properly applied to a sample prior to using an analyzer.

### SUMMARY OF THE DISCLOSURE

Embodiments of the disclosure related generally to analyzers, and more specifically to analyzing multi-well plates used in analyzers.

In an aspect, a method includes analyzing, using a machine learning model, a sample inserted in an analyzer to determine whether a plate insert matches a multi-well plate (MWP). The method further includes, in response to the machine learning model a mismatch between the plate insert and MWP, generating an alert on the analyzer to notify a user indicating the mismatch. The method also includes, in response to the machine learning model determining that the plate insert matches the MWP, analyzing, using the machine learning model, the sample to determine whether the MWP is sealed with a foil. The method includes, in response to the machine learning model determining that the MWP is not sealed with foil, generating the alert on the analyzer, and otherwise, enabling the analyzer to perform its analysis of the sample.

In some aspects, the machine learning model is trained using a combination of real and augmented images.

In some aspects, the machine learning model is trained using a training data set that includes images of MWPs with at least two different number of wells.

In some aspects, the images of MWPs with at least two different number of wells include images with and without foil on the MWPs.

In some aspects, the machine learning model is trained using a training data set that includes images of both correct and incorrect MWP and foil combinations.

In some aspects, the machine learning model is trained using a training data set that includes images of MWPs with a plurality of fill volumes, a plurality of dyes, and a plurality of foil types.

In some aspects, the machine learning model is trained using a training data set that includes images of MWPs with a plurality of different fill patterns.

In some aspects, the machine learning model is trained using a training data set that includes images of MWPs with user errors.

In some aspects, the analyzing the sample to determine whether the mismatch between the plate insert and MWP comprises calculating a confidence score, and the alert is generated when the confidence score is below a threshold value.

In some aspects, the analyzing the sample to determine whether the MWP is sealed with the foil comprises calculating a confidence score, and wherein the alert is generated when the confidence score is below a threshold value.

In some aspects, the method also includes receiving, from a user, instructions to proceed with operations of the analyzer when either alert is generated.

In some aspects, the machine learning model comprises a plurality of machine learning sub-models, and wherein a first machine learning sub-model of the plurality of machine learning sub-models is trained to determine whether the plate insert matches the MWP and a second machine learning sub-model of the plurality of machine learning sub-models is trained to determine whether the sample is sealed with the foil.

In some aspects, the first machine learning sub-model and the second machine learning sub-model are trained using different data sets.

In some aspects, the augmented images are generated using a plurality of augmentation techniques.

In another aspect, a system includes a memory and a processor coupled to the memory. The processor is configured to analyze, using a machine learning model, a sample inserted in an analyzer to determine whether a plate insert matches a multi-well plate (MWP). The processor is further configured to, in response to the machine learning model a mismatch between the plate insert and MWP, generate an alert on the analyzer to notify a user indicating the mismatch. The processor is also configured to, in response to the machine learning model determining that the plate insert matches the MWP, analyze, using the machine learning model, the sample to determine whether the MWP is sealed with a foil. The processor is also configured to, in response to the machine learning model determining that the MWP is not sealed with foil, generate the alert on the analyzer, and otherwise, enable the analyzer to perform its analysis of the sample.

### Brief description of the drawings

The novel features of the disclosure are set forth with particularity in the claims that follow. A better understanding of the features and advantages of the present disclosure will be obtained by reference to the following detailed description that sets forth illustrative embodiments, in which the principles of the disclosure are utilized, and the accompanying drawings of which:
FIG. 1 is a block diagram illustrating an embodiment an optical system of an analyzer, according to aspects of the present disclosure.
FIG. 2 depicts a diagram illustrating an example of a machine learning model, according to aspects of the present disclosure.
FIG. 3 is a block diagram illustration an embodiment of a method 300 for analyzing a MWP inserted in an analyzer, according to aspects of the present disclosure.
FIG. 4 is a block diagram illustrating an embodiment of a computer system, according to aspects of the present disclosure.

### DETAILED DESCRIPTION

The disclosure described here is a system and method based on a machine learning algorithm for analyzing a sample inserted in an analyzer.

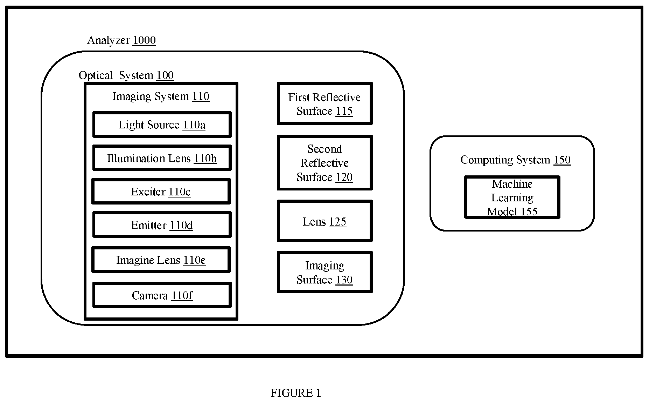

FIG. 1 is a block diagram illustrating an embodiment of an analyzer, according to aspects of the present disclosure. For example, as shown in FIG. 1, an analyzer 1000 includes an optical system 100 and a computing system 150. In some embodiments, the optical system 100 includes an imaging system 110, first and second reflective surfaces 115 and 120, respectively, a lens 125, and an imaging surface 130. In some embodiments, the imagine system 110 may include a light source 110a configured to generate a beam of light, an illumination lens 110b configured to focus the beam of light, and an exciter 110c configured to transmit the focused beam of light onto the first reflective surface 115. In some embodiments, the focused beam of light is reflected off the first reflective surface 115 onto the second reflective surface 120, which in turn is transmitted onto the imaging surface 130 through the lens 125.

In turn, light is reflected from the imagining surface 130 through lens 125 and off of the first and second reflective surfaces 115, 120 onto the imaging system 110. In some embodiments, the imaging system 110 may further include an emitter 110d configured to receive the reflected light from the imaging surface 130, an imaging lens 110e configured to focus the reflected light, and a camera 110f configured to capture the reflected light from the imaging surface 130. In some embodiments, the camera 110f can be used for fluorescence imaging due to its high sensitivity, low noise, and high temporal stability.

In some embodiments, the computing system 150 may execute a machine learning model 155 to determine: 1) whether a plate insert matches a MWP; and 2) whether a foil was correctly applied to the MWP. For example, the machine learning model 155 may analyze the images captured by the camera 110f based on epi-fluorescence imaging, which is a dark field method for achieving a high signal to background ratio. Epi-fluorescence imaging is based on analyzing a bright image of a positive sample lighting up in front of a dark scene.

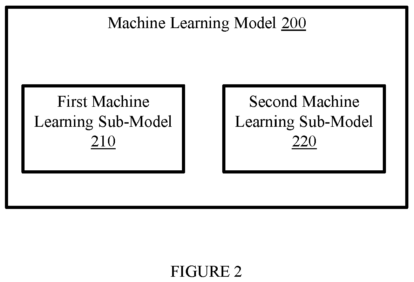

FIG. 2 depicts a diagram illustrating an example of a machine learning model, according to aspects of the present disclosure. In some embodiments, a machine learning model 200 may include may include a first machine learning sub-model 210 and a second machine learning sub-model 220. The first machine learning sub-model 210 may be trained to identify mismatched plates and second machine learning sub-model 220 may be training to identify whether a foil was properly applied to the MWP. In some embodiments, the machine learning model 200 may be a supervised machine learning model. For example, the first and second machine learning sub-models 210, 220 may be a convolutional neural network trained for perform object classification. Namely, the objection classification may be considered a binary classification problem at each of the first and second machine learning sub-models 210, 220, i.e., correct plate versus or not at the first machine learning sub-model 210 and whether a foil was applied correctly or not at the second machine learning sub-model 220).

In some embodiments, the machine learning sub-models 210, 200 may be trained using a variety of conditions. For example, some conditions to generate a greater depth of data variation may include MWPs with a different number of sample wells, e.g., a MWP with a 96 well format and/or a MWP with a 384 well format, MWPs with and without sealing foils, MWPs with different types of sealing foils, MWPs with different batches of samples, MWPs with borderline cases, e.g. bubbles in fluid, MWPs with different volumes in wells, images of MWPs with different settings for the analyzer 1000 (e.g., PCR excitation and emission filters), images captured using different types of analyzers, and images the MWPs with both correct and incorrect plate combinations.

In some embodiments, the first machine learning sub-model 210 and the second machine learning sub-model 220 may be trained using different images of a training data set. For example, images with mismatched plates used to train the first machine learning sub-model 210 may be excluded from the training data set used to train the second machine learning sub-model 220. Similarly, images with different foil applications used to train the second machine learning sub-model 220 may be excluded from the training data set used to train the first machine learning sub-model 210. In some embodiments, for the machine learning sub-models 210, 200, images in the training data set that include 96 well MWPs may also include one or more eight (8) well inserts.

In some embodiments, for the first machine learning sub-model 210, the ground truth may be zero (0) for images depicting mismatching plates and one (1) for images with matching plates. In further embodiments, for the second machine learning sub-model 220, the ground truth may be zero (0) for images with improperly applied foil and one (1) for images with properly applied foil.

In some embodiments, the training data set may also include images with any number of fill patterns. That is, the images may include some wells filled with a sample, whereas other wells may remain empty in a designed pattern. For example, the training data set may include two, four, six, or eight different designed patterns. It should be understood by those of ordinary skill in the art that these are merely example fill patterns and other fill patterns may be used in accordance with aspects of the present disclosure.

In some embodiments, the machine learning sub-models 210, 220 may be trained using a combination of both real images and simulated images (or augmented images). In some embodiments, data augmentation may be used during preprocessing of real images to imitate the remaining different fill patterns. The augmented images may be created using a plurality of different augmentation techniques to generate variability across the training data. For example, a first technique may be used to black out individual rectangles of various sizes from the real images. As another example, a second technique may be used to black out a varying number and angle of small squares scattered across the real images. In a further example, a third technique may be used to remove an individual rectangle of various sizes from a first image and replace it with a rectangle from the same size of a second image. In yet another example, a fourth technique may use a weighted average of the first and second images, with the weights varying randomly. In some embodiments, two or more of the augmentation techniques may be combined with one another. For example, the third and fourth techniques may be used to combine two real images from the training dataset to create a new batch of two images. In some embodiments, the data augmentation techniques described herein were used to generate thousands of images.

In some embodiments, when combining two or more augmentation techniques, the pairs of real images may have a common ground truth. To achieve this, augmented images may be created using two images from a common training data set, e.g., both images may depict matched and mismatched plates. As such, the ground truth of the augmented image may be the same as the original images.

In addition, images with eight well inserts may be treated separately during data augmentation. Namely, in any batch of two images, one image with unfilled eight well inserts was paired with one image with filled eight well inserts before data augmentation was applied.

In further embodiments, images in the training data set used for the second machine learning sub-model 200 may include images with user errors including, but not limited to, wrinkles, shaking, and bubbles, or the like. Additionally, the images in the training data set for either the first machine learning sub-model 210 and/or the second machine learning sub-model 200 may include modifications to the MWP to simulate variability across different instruments and plate placement by raising each of the four corners of the MWP up during experimentation and/or sliding the MWP within the horizontal plane. Additionally, the images in the training data set for either the first machine learning sub-model 210 and/or the second machine learning sub-model 200 may include images with physical alterations to the MWP. As some examples, the physical alterations may include placing an adhesive material, e.g., tape, and/or a solid cover, e.g., a plastic layer, over sections of the MWP. By modifying the images used the training sets as described herein, the machine learning model 200 may be implemented on different analyzers, e.g., different models of analyzers, different manufacturers of analyzers, or different serial numbers of a same type of analyzer.

In some embodiments, the images used in the training data set may also be preprocessed. The preprocessing may include scaling pixel values of the raw images to convert the raw images from 16 bit images to gray scale pixel values less or equal to 255. Additionally, the preprocessing may include removing overexposed portions of the real images. For example, for blurry portions of a given real image, the pre-processing may include removing those blurry sections. Additionally, a subset of the pixels may be used as input to the model. For example, for both 96 and 384 MWPs, a border region a given image may be removed. This may be achieved by cropping one or more edges of the image, and a remaining central rectangle may be subdivided into nine (9) equal rectangles. In some embodiments, a single region may be used to train the machine learning model 200, and the remaining regions may be discarded. The region used to train the machine learning model may be down-sampled to squares of 224 x 224 using linear interpolation to put it in the correct format for use with the machine learning model 200. In some embodiments, over exposure correction may be implemented prior to any modifications to the image being performed, e.g., prior to any image cropping or image augmentation.

In some embodiments, the first and second machine learning sub-models 210, 220 may calculate a confidence score. For example, the confidence score may be on a scale of 0.0 to 1.0. When the confidence score is below a first threshold level, e.g., 0.8, the first and second machine learning sub-models 210, 220 may generate an alert, e.g., a visual or audio alert. When the confidence score is below a second threshold, e.g., 0.5, the first and second machine learning sub-models 210, 220 may generate a command that prevents the analyzer 1000 from analyzing the sample, thereby preventing any potential contamination of the analyzer 1000.

In operation, the analyzer 1000 is configured to analyze either a 96 well MWP or a 384 well MWP, such that the first machine learning sub-model 210 is aware of which type of MWP is being analyzed. Once the MWP is inserted, the analyzer 1000 captures an image of the MWP using the optical system 100. Then, the first machine learning sub-model 210 analyzes the captured imaged to determine whether the middle plate matches a top and bottom plate, e.g., whether there is a plate mismatch. Some indicators of a mismatch may include, but are not limited to, partial circles, e.g., semi-circles or crescents based on an angle of the WMP relative to the optical system 100, caused by the misalignment of the top and middle layers. That is, the first machine learning sub-model 210 analyzes the wells of the MWP to identify any semi-circles or crescents at an incorrect angle in the captured image, thereby indicating the mismatch between the top layer and the plate insert.

In some embodiments, when the first machine learning sub-model 210 determines that there is a plate mismatch, the analyzer 1000 may generate an alert, e.g., a visual or audible alert. In contrast, when the first machine learning sub-model 210 determines that there is no plate mismatch, the second machine learning sub-model 220 further analyzes the MWP to determine whether a foil was properly applied. For example, using the same captured image, the second machine learning sub-model 220 analyzes each well of the MWP to ensure that the foil was properly applied. To do so, the second machine learning sub-model 220 analyzes an intensity of light reflected at each well. In some embodiments, a reduced light intensity may indicate that the foil is not properly applied. In other words, when the foil is not taut against the MWP, the intensity of the light reflected off the foil is lower, thereby indicating that the foil was not properly applied. In some embodiments, when the second machine learning sub-model 220 determines that the foil is not properly applied, the analyzer 1000 may generate an alert, e.g., a visual or audible alert.

The present disclosure advantageously uses the existing hardware components of the analyzer. That is, no hardware modifications are required in order to be implemented the processes described herein. In addition, the processes described herein can be used without any changes to the consumables, e.g., the foil(s) and/or the MWPs.

Using the techniques described herein, the present disclosure improved the functionality of the analyzer 1000 and the computational resources required to perform the MWP plate analysis. For example, the present disclosure reduced the data required to execute the machine learning model to less than 10 megabytes, whereas conventional machine learning models required over 20 megabytes of data. Similarly, the present disclosure reduced the runtime required to execute the machine learning model to less than 500 milliseconds, whereas conventional machine learning models required over 2000 milliseconds.

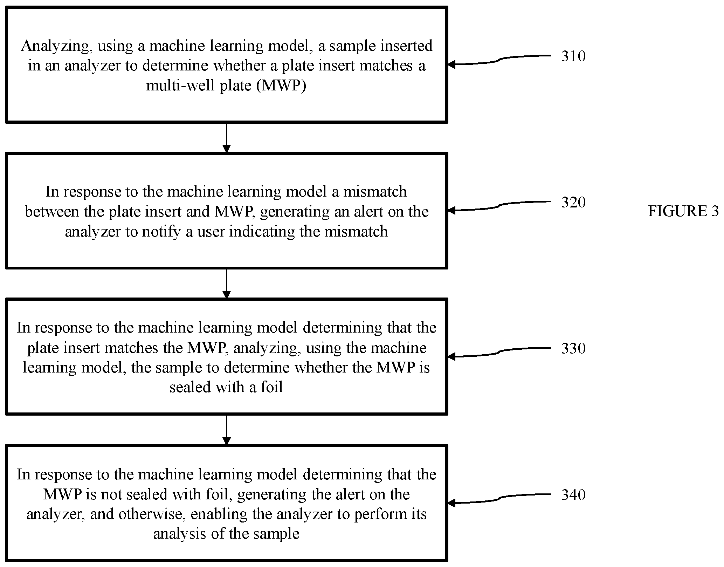

FIG. 3 is a block diagram illustration an embodiment of a method 300 for analyzing a MWP inserted in an analyzer, according to aspects of the present disclosure. At step 310, the method 300 may include analyzing, using machine learning model, a sample inserted in an analyzer, e.g., the analyzer 1000 of FIG. 1, to determine whether a plate insert matches a multi-well plate (MWP). For example, a first machine learning sub-model, e.g., the first machine learning sub-model 210 of FIG. 2, may analyze a captured imaged of the sample to determine whether a middle plate matches a top and bottom plate. A plate mismatch may occur when the image include an indicator that the plate insert and top layer are misaligned. For example, some indicators, but are not limited to, partial circles, e.g., semi-circles or crescents as described herein.

At 320, the method 300 may further include, in response to the machine learning model a mismatch between the plate insert and MWP, generating an alert on the analyzer to notify a user indicating the mismatch. For example, the alert may include a visual and an audio alert.

At 330, the method 300 may include, in response to the machine learning model determining that the plate insert matches the MWP, analyzing, using the machine learning model, the sample to determine whether the MWP is sealed with a foil.. For example, using the same captured image, a second machine learning sub-model, e.g., the second machine learning sub-model 220 of FIG. 2, may analyze each well of the MWP to ensure that the foil was properly applied. The second machine learning sub-model 220 may analyze an intensity of light reflected at each well, and a reduced light intensity may indicate that the foil is not properly applied.

At 340, the method 300 further includes, in response to the machine learning model determining that the MWP is not sealed with foil, generating the alert on the analyzer, and otherwise, enabling the analyzer 1000 to perform its analysis of the sample. For example, the alert may include a visual and an audio alert.

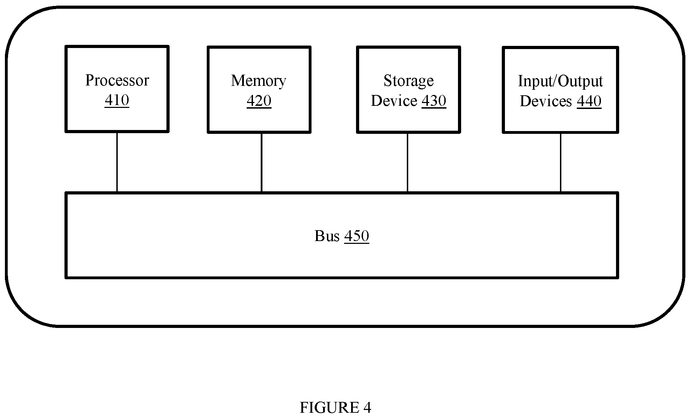

FIG. 4 is a block diagram illustrating one embodiment of a computer system 400 configured to implement one or more aspects of the present disclosure. For example, the machine learning model 200 and/or the method 300 of FIG. 3 may be implemented using the computer system 400.

As shown in FIG. 4, computing system 400 can include a processor 410, a memory 420, a storage device 430, and input/output devices 440. Processor 410, memory 420, storage device 430, and input/output devices 440 can be interconnected via system bus 450. Processor 410 is capable of processing instructions for execution within the computing system 400. In some example embodiments, processor 410 can be a single-threaded processor. Alternately, processor 410 can be a multi-threaded processor. Processor 410 is capable of processing instructions stored in memory 420 and/or on the storage device 430 to display graphical information for a user interface provided via the input/output device 440.

Memory 420 is a computer readable medium such as volatile or non-volatile that stores information within computing system 400. Memory 420 can store data structures representing configuration object databases, for example. Storage device 430 is capable of providing persistent storage for computing system 400. Storage device 430 can be a floppy disk device, a hard disk device, an optical disk device, or a tape device, or other suitable persistent storage means. Input/output device 440 provides input/output operations for the computing system 400. In some example embodiments, input/output device 440 includes a keyboard and/or pointing device. In various implementations, the input/output device 440 includes a display unit for displaying graphical user interfaces.

According to some example embodiments, input/output device 440 can provide input/output operations for a network device. For example, input/output device 440 can include Ethernet ports or other networking ports to communicate with one or more wired and/or wireless networks (e.g., a local area network (LAN), a wide area network (WAN), the Internet).

In some example embodiments, computing system 400 can be used to execute various interactive computer software applications that can be used for organization, analysis and/or storage of data in various formats. Alternatively, computing system 400 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities or can be standalone computing products and/or functionalities. Upon activation within the applications, the functionalities can be used to generate the user interface provided via input/output device 440. The user interface can be generated and presented to a user by computing system 400 (e.g., on a computer screen monitor, etc.).

One or more aspects or features of the subject matter described herein can be realized in digital electronic circuitry, integrated circuitry, specially designed application-specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

Terminology used herein is for the purpose of describing particular embodiments only and is not intended to be limiting of the disclosure. For example, as used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present disclosure.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

As used herein in the specification and claims, including as used in the examples and unless otherwise expressly specified, all numbers may be read as if prefaced by the word "about" or "approximately," even if the term does not expressly appear. The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values), etc. Any numerical values given herein should also be understood to include about or approximately that value, unless the context indicates otherwise. For example, if the value "10" is disclosed, then "about 10" is also disclosed. Any numerical range recited herein is intended to include all sub-ranges subsumed therein. It is also understood that when a value is disclosed that "less than or equal to" the value, "greater than or equal to the value" and possible ranges between values are also disclosed, as appropriately understood by the skilled artisan. For example, if the value "X" is disclosed the "less than or equal to X" as well as "greater than or equal to X" (e.g., where X is a numerical value) is also disclosed. It is also understood that the throughout the application, data is provided in a number of different formats, and that this data, represents endpoints and starting points, and ranges for any combination of the data points. For example, if a particular data point "10" and a particular data point "15" are disclosed, it is understood that greater than, greater than or equal to, less than, less than or equal to, and equal to 10 and 15 are considered disclosed as well as between 10 and 15. It is also understood that each unit between two particular units are also disclosed. For example, if 10 and 15 are disclosed, then 11, 12, 13, and 14 are also disclosed.

Although various illustrative embodiments are described above, any of a number of changes may be made to various embodiments without departing from the scope of the disclosure as described by the claims. For example, the order in which various described method steps are performed may often be changed in alternative embodiments, and in other alternative embodiments one or more method steps may be skipped altogether. Optional features of various device and system embodiments may be included in some embodiments and not in others. Therefore, the foregoing description is provided primarily for exemplary purposes and should not be interpreted to limit the scope of the disclosure as it is set forth in the claims.

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure. Such embodiments of the inventive subject matter may be referred to herein individually or collectively by the term "invention" merely for convenience and without intending to voluntarily limit the scope of this application to any single invention or inventive concept, if more than one is, in fact, disclosed. Thus, although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method comprising:
analyzing, using a machine learning model (200), a sample inserted in an analyzer (1000) to determine whether a plate insert matches a multi-well plate (MWP);
in response to the machine learning model (200) a mismatch between the plate insert and MWP, generating an alert on the analyzer to notify a user indicating the mismatch;
in response to the machine learning model (200) determining that the plate insert matches the MWP, analyzing, using the machine learning model, the sample to determine whether the MWP is sealed with a foil; and
in response to the machine learning model (200) determining that the MWP is not sealed with foil, generating the alert on the analyzer, and otherwise, enabling the analyzer to perform its analysis of the sample.

2. The method of claim 1, wherein the machine learning model (200) is trained using a combination of real and augmented images.

3. The method of claim 1, wherein the machine learning model (200) is trained using a training data set that includes images of MWPs with at least two different number of wells.

4. The method of claim 3, wherein the images of MWPs with at least two different number of wells include images with and without foil on the MWPs.

5. The method of claim 1, wherein the machine learning model (200) is trained using a training data set that includes images of both correct and incorrect MWP and foil combinations.

6. The method of claim 1, wherein the machine learning model (200) is trained using a training data set that includes images of MWPs with a plurality of fill volumes, a plurality of dyes, and a plurality of foil types.

7. The method of claim 1, wherein the machine learning model (200) is trained using a training data set that includes images of MWPs with a plurality of different fill patterns.

8. The method of claim 1, wherein the machine learning model (200) is trained using a training data set that includes images of MWPs with user errors.

9. The method of claim 1, wherein analyzing the sample using the machine learning model (200) to determine whether the mismatch between the plate insert and MWP comprises calculating a confidence score, and the alert is generated when the confidence score is below a threshold value.

10. The method of claim 1, wherein analyzing the sample using the machine learning model (200) to determine whether the MWP is sealed with the foil comprises calculating a confidence score, and wherein the alert is generated when the confidence score is below a threshold value.

11. The method of claim 1, receiving, from a user, instructions to proceed with operations of the analyzer when either alert is generated.

12. The method of claim 1, wherein the machine learning model comprises a plurality of machine learning sub-models (210, 220), and wherein a first machine learning sub-model (210) of the plurality of machine learning sub-models is trained to determine whether the plate insert matches the MWP and a second machine learning sub-model (220) of the plurality of machine learning sub-models is trained to determine whether the sample is sealed with the foil.

13. The method of claim 12, wherein the first machine learning sub-model (210) and the second machine learning sub-model (220) are trained using different data sets.

14. The method of claim 2, wherein the augmented images are generated using a plurality of augmentation techniques.

15. A system comprising:
a memory (420) ; and
a processor (410) coupled to the memory (420) and configured to:
analyze, using a machine learning model (200), a sample inserted in an analyzer (1000) to determine whether a plate insert matches a multi-well plate (MWP);
in response to the machine learning model (200) a mismatch between the plate insert and MWP, generate an alert on the analyzer to notify a user indicating the mismatch;
in response to the machine learning model (200) determining that the plate insert matches the MWP, analyze, using the machine learning model, the sample to determine whether the MWP is sealed with a foil; and
in response to the machine learning model (200) determining that the MWP is not sealed with foil, generate the alert on the analyzer, and otherwise, enable the analyzer to perform its analysis of the sample.
